(19) Europäisches Patentamt
European Patent Office
Office européen des brevets

(11) **EP 1 840 807 A1**

(12) **EUROPEAN PATENT APPLICATION**

(43) Date of publication:
**03.10.2007 Bulletin 2007/40**

(51) Int Cl.:
**G06Q 10/00** $^{(2006.01)}$  **G06Q 30/00** $^{(2006.01)}$
**G06Q 50/00** $^{(2006.01)}$

(21) Application number: **06405208.7**

(22) Date of filing: **15.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.03.2006 US 787494 P**

(71) Applicant: **ABB RESEARCH LTD.**
**8050 Zürich (CH)**

(72) Inventors:
• **Yuen, Cherry**
  **5400 Baden (CH)**
• **Poncet, Andreas**
  **8049 Zürich (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Converting independent resources into a product**

(57) The present invention is concerned with a method of converting two independent resources into a product, in particular in a conversion system comprising hydro and thermal power plants for generating electricity. It involves, for a stochastic resource and at a particular stage, a number of ND distinct states representing time-wise independent realizations of an a-priori unknown random vector. The latter gives rise to constraints that accompany an objective or cost function involving control variables indicative of a consumption of the resources. In a so-called forward simulation, for each one of a number of stages, tentative optimal solutions for the control variables are successively calculated. In the subsequent so-called backward recursion, for each stage an approximate future objective function is refined or improved. To this purpose, a number of Bender's cuts or optimality cuts which does not exceed the number of distinct states are calculated for each one of the multiple stages. After a few iterations of the forward simulation and the backward recursion, a production schedule indicating the preferred consumption of the resources during the future stages is finally derived, based on the optimal solutions of the control variables calculated at the ultimate iteration.

Fig. 3

EP 1 840 807 A1

**Description**

FIELD OF THE INVENTION

The invention relates to the field of operation scheduling of systems converting independent resources into a product, in particular hydro and thermal plants. It departs from a method of converting two independent resources into a product as described in the preamble of claim 1.

BACKGROUND OF THE INVENTION

The objective of an optimal operation of a power system comprising a multitude of different power plants is to determine an operation schedule or strategy which, for each stage (a week or a month) of the planning period and given the system state at the beginning of the stage, produces generation targets for each plant. The operation strategy should minimize the expected total operation cost comprising e.g. the cost of the fossil fuels to be combusted in thermal power plants plus penalties for failure in load supply to the customer.

In a hydrothermal power system comprising at least one hydro power plant, the instantaneous availability of limited amounts of hydroelectric energy in the form of stored water in the system reservoirs makes the optimal operation problem very complex. The reason for this resides in the fact that any operation decision for a given stage has a consequence that reaches far into the future. In other words, if a stock of hydroelectric energy is depleted, and low inflow volumes do occur, it may be necessary to use very expensive thermal generation in the future or even fail to supply the load. On the other hand, if the reservoir levels are kept high through a more intensive use of thermal generation, and high inflow volumes occur, there may be spillage in the system due to limited storage capability of each reservoir, which means a waste of energy and consequently higher operating costs.

For many renewable sources of energy it is impossible to have a perfect forecast of their future availability such as the inflow of water to the reservoirs of a hydroelectric power plant. Accordingly, as well as to a lesser extent due to the future load itself, the operation problem is essentially stochastic. The dimensionality of the problem considerably increases if *multiple interconnected reservoirs* and *multi-stage* optimization have to be considered.

In addition, despite the fact that hydro plants have no direct operating costs, they provide the option of generating the energy today or storing the water for future use. In other words, they have an opportunity cost that reflects the revenue resulting from energy sales in the future. In real situations, however, there is again uncertainty regarding future prices, which can be either higher or lower than the current one. Therefore, the decision whether to store or use the water likewise depends on an analysis of the consequences of each decision for all the future price scenarios.

The optimization problem described above can be solved by means of so-called Stochastic Dual Dynamic Programming (SDDP) as detailed in the article by M.V.F. Pereira entitled "Optimal Stochastic Operations Scheduling of Large Hydroelectric Systems", International Journal of Electric Power and Energy Systems, Vol. 11, pp 161-169, No. 3, July 1989. The minimum-cost stochastic operating policy of a hydrothermal system is calculated taking into account various operational details of hydro plants (water balance, limits on storage and turbined outflow, spillage, filtration), a detailed thermal plant modelling (fuel contracts, convex efficiency curves, fuel consumption constraints) as well as hydrological uncertainty (seasonality, time and space dependence, severe droughts).

DESCRIPTION OF THE INVENTION

It is an objective of the invention to optimize the consumption or use of a deterministic and a stochastic resource with, respectively, a predictable and non-predictable future availability in a system converting the resources independently into a product to meet a certain demand. In particular, if the conversion system comprises a combination of hydro and thermal power plants for generating electricity according to a hydrothermal operating schedule, the invention aims at minimizing a long-term consumption of a fossil fuel as a deterministic resource of a thermal power plant. These objectives are achieved by a method of and an operation scheduler for converting two independent resources according to the claims 1 and 9, respectively. Further preferred embodiments are evident from the dependent patent claims.

According to the invention, the backward recursion in a multi-stage stochastic programming procedure is streamlined, enabling one to consider and evaluate a wider range of stochastic parameter or constraint evolutions in the same evaluation time, and thus to produce further optimized operation schedules. The backward recursion procedure includes, for each one of the multiple stages or future time intervals, the calculation of a number of Bender's cuts or optimality cuts which does not exceed a number of states representing realizations of a random vector for one stage. In particular, this calculation is not repeated, for each stage and for each state, to additionally account for availability scenarios representing an inter-stage dependence or link of the states. Accordingly, and contrary to the aforementioned prior art comprising, for each stage and state, an additional loop over a number of availability scenarios, the number of Bender's cuts or optimality cuts to be calculated for each stage is *not* an integer multiple of a number of availability scenarios.

In more detail, the method of converting the two independent resources involves, for the stochastic resource and at a particular stage, a number of ND distinct states or vectors of exogenous variables representing time-wise independent realizations or discretizations of an a-priori unknown random vector. The latter gives rise to constraints that accompany an objective or cost function involving control variables indicative of a consumption of the resources. In a so-called forward simulation, for each one of a number of stages, tentative optimal solutions for the control variables are successively calculated. In the subsequent so-called backward recursion, for each stage an approximate future objective function is refined or improved. To this purpose, a number of Bender's cuts or optimality cuts are calculated, wherein this number is limited or reduced as detailed in the previous paragraph. After a few iterations of the forward simulation and the backward recursion, a production schedule indicating the preferred consumption of the resources during the future stages is finally derived, based on the optimal solutions of the control variables calculated at the ultimate iteration.

In a preferred embodiment of the invention, an average objective function or expected cost function is calculated for each stage as a weighted average of the Benders cuts. This averaged or unified function is used in the forward simulation and further justifies the fact of disregarding the influence of individual availability scenarios.

In a first advantageous variant of the invention, a particular scenario is selected among the number of availability scenarios, and the corresponding optimal solution obtained in the forward simulation is used in the subsequent backward recursion as a trial decision. It is one of the merits of the present invention to realize that the various results obtained with various selected availability scenarios are all within a specified tolerance and hence perfectly acceptable.

In a second advantageous variant of the invention, states and scenarios are identified both in their respective number and in their distinct states or vectors of exogenous variables. In the backward recursion, a single-stage sub problem for each stage and for each state k includes the respective optimal solution for the control vector as trial decision. According to a further refinement, a Bender's cut calculated for a given stage and state does only depend on the previously calculated Bender's cut for the same state. The average of the Benders' cuts for a given stage is then only used for the next forward simulation.

The present invention also relates to a computer program product including computer program code means for controlling one or more processors of an operation scheduler, in particular a computer program product including a computer readable medium containing therein the computer program code means.

BRIEF DESCRIPTION OF THE DRAWINGS

The subject matter of the invention will be explained in more detail in the following text with reference to preferred exemplary embodiments which are illustrated in the attached drawings, wherein:

Fig. 1 schematically depicts a system with two thermal and two hydro power plants,
Fig.2 is a flowchart of the forward iteration,
Fig.3 is a flowchart of a first variant of the backward recursion, and
Fig.4 is a flowchart of a second variant of the backward recursion.

The reference symbols used in the drawings, and their meanings, are listed in summary form in the list of reference symbols. In principle, identical parts are provided with the same reference symbols in the figures.

DETAILED DESCRIPTION OF PREFERRED EMBODIMENTS

Multi-stage stochastic optimization problems may be solved by so-called Stochastic Dual Dynamic Programming (SDDP), based on the approximation of the expected-cost-togo functions of stochastic dynamic programming by piecewise linear functions. The latter are obtained from the dual solutions of the optimization problem at each stage and can be interpreted as Bender's cuts or optimality cuts in a multistage decomposition algorithm. In the following, the procedure is explained in summarized form, details may be found in the article by M.V.F. Pereira entitled "Optimal Stochastic Operations Scheduling of Large Hydroelectric Systems", International Journal of Electric Power and Energy Systems, Vol. 11, pp 161-169, No.3, July 1989.

In order to illustrate the basic concepts of dual dynamic programming, the following linear problem (1) for a *two-stage deterministic* case is considered:

$$\text{Min} \quad c_1 x_1 + c_2 x_2 \qquad\qquad\qquad (\text{eq.1a})$$

$$\text{s.t.} \qquad A_1 x_1 \geq b_1 \qquad\qquad\qquad \text{(eq.1b)}$$

$$E_1 x_1 + A_2 x_2 \geq b_2 \qquad\qquad\qquad \text{(eq.1c)}$$

where, at stage 1 and stage 2, respectively:

$x_1$, $x_2$ = vector of control and state variables,
$c_1$, $c_2$ = vector of cost coefficients,
$b_1$, $b_2$ = vector of exogenous variables,
$A_1$, $A_2$ = matrix relating control and exogenous variables,
$E_1$ = state-space matrix

An example with illustrative numerical values is given further below.

The above problem (1) aims at minimizing a sum of a first stage or present objective $c_1 x_1$ and a second stage or future objective $c_2 x_2$, and thus can be interpreted as a two-stage decision or sequential decision process. Basically, in the first stage, corresponding to the present or to the immediate future, a possible solution or decision $x_1$ obeying the first constraint (eq.1b) is chosen, following which an optimal solution of the second stage, corresponding to a more distant future, has to be found. This second-stage problem or single-stage sub-problem including the future objective function $c_2 x_2$ is re-defined or translated as a scalar function of the solution $x_1$ at the first stage:

$$\alpha_1(x_1) = \text{Min} \quad c_2 x_2 \qquad\qquad\qquad \text{(eq.2a)}$$

$$\text{s.t.} \qquad A_2 x_2 \geq b_2 - E_1 x_1 \qquad\qquad\qquad \text{(eq.2b)}$$

With this future objective function $\alpha_1(x_1)$, the master problem to be solved is rewritten:

$$\text{Min} \qquad c_1 x_1 + \alpha_1(x_1) \qquad\qquad\qquad \text{(eq.3a)}$$

$$\text{s.t.} \qquad A_1 x_1 \geq b_1 \qquad\qquad\qquad \text{(eq.3b)}$$

The future objective function $\alpha_1(x_1)$ can be represented as a piecewise linear function by reverting, in accordance with Linear Programming (LP) theory, to the dual problem of the second stage problem (eqs.2). As detailed in the article mentioned above, an approximation $\hat{\alpha}_1(x_1)$ to the future objective function $\alpha_1(x_1)$ can be constructed as

$$\hat{\alpha}_1(x_1) = \text{Min} \quad \alpha \qquad\qquad\qquad \text{(eq.4a)}$$

$$\text{s.t.} \qquad \alpha \geq \pi_1^i (b_2 - E_1 x_1) \text{ for } i = 1\ldots n \qquad\qquad\qquad \text{(eq.4b)}$$

where $\{\pi_1^i, i=1\ldots n\}$ is a subset of all the vectors $\{\pi^v\}$ of dual variables $\pi$ that solve the constraint $\pi A_2 \leq c_2$ of the dual problem to the second-stage problem (eqs.2). The subset $\{\pi_1^i, i=1\ldots n\}$ comprises the dual variables which form the so-called Bender's cuts or optimality cuts associated to a set of first-stage trial decisions $\{x_1^i, i=1\ldots n\}$ and the corresponding solutions $\{\hat{x}^i_2\}$ of the second-stage problem (eq.2). The approximation $\hat{\alpha}_1(x_1)$ is a lower bound to the true future cost function $\alpha_1(x_1)$, leading to a lower bound $\underline{z} = c_1 \hat{x}_1 + \hat{\alpha}(\hat{x}_1)$ of the true optimal total cost (eq.1a) when solving the approx-

imating master problem:

$$\text{Min} \quad c_1 x_1 + \alpha \qquad \qquad \text{(eq.5a)}$$

$$\text{s.t.} \quad A_1 x_1 \geq b_1 \qquad \qquad \text{(eq.5b)}$$

$$\alpha \geq \pi_1^i (b_2 - E_1 x_1) \text{ for i=1...n} \qquad \qquad \text{(eq.5c)}$$

On the other hand, an upper bound $\bar{z}$ for the true optimal total cost can be obtained by solving the second-stage problem (eq.2) with the previously found optimal value $\hat{x}_1$ for $x_1$. If the difference $\bar{z}$ - $\underline{z}$ between the two bounds is small enough, the procedure stops, otherwise, it reiterates with new trial values for the approximation of the future cost function. A good candidate for a new trial value is the optimal solution $\hat{x}_1$ of the previous iteration or approximate optimization problem. This way, the approximation $\hat{\alpha}_1 (x_1)$ of $\alpha_1(x_1)$ is refined in the neighborhood of candidates for the true optimal solution.

A first generalization to *Stochastic* Dual Dynamic Programming (SDDP) takes into account the fact that the exogenous variables $\{b_t,$ t=1...T$\}$ represent physical or environmental constraints that are not known in advance with absolute certainty. In this situation, the vectors $\{b_t\}$ are assumed to follow a probability distribution that can be represented in discrete form by a limited number of ND states or sample vectors $\{b_{t,k},$ t=1...T, k=1...ND$\}$ or vectors of exogenous variables. From the latter, an exponentially increasing number NS of availability scenarios or trajectories may be conventionally generated by random sampling from the discretized set $\{b_{tk}\}$ and building sequences comprising one of the states for each stage t. Furthermore, the different states $\{b_{t,k}\}$ as well as the different scenarios may both be assigned distinct probabilities.

Generally, the first-stage exogenous variable $b_1$ is assumed to be known, i.e. deterministic. For a two-stage stochastic problem, the formulation in Linear Programming form is then given as:

$$\text{Min} \quad c_1 x_1 + p_1 c_2 x_{21} + p_2 c_2 x_{22} + ... + p_m c_2 x_{2m} \qquad \text{(eq.6a)}$$

$$A_1 x_1 \geq b_1,$$
$$E_1 x_1 + A_2 x_{21} \geq b_{21},$$

$$\text{s.t.} \quad E_1 x_1 \qquad + A_2 x_{22} \geq b_{22}, \qquad \qquad \text{(eq.6b)}$$
$$\vdots$$
$$E_1 x_1 \qquad \qquad + A_2 x_{2m} \geq b_{2m}$$

where

$x_{t,j}$ = vector of control variables at stage t of scenario j, t = 1,2, j = 1,2,...,m,
$p_j$ = probability associated to scenario j,
$c_t$ = vector of cost coefficients associated to the corresponding elements of x at stage t,
m = ND = NS = total number of states and maximum number of scenarios for stage two.

With the decomposition approach, as for the deterministic case, the problem according to eq.6 is decomposed into a master problem (eq.3a, 3b) and a single-stage sub-problem (eq.2a, 2b) for each scenario. An averaged future objective function is defined as

$$\overline{\alpha}_1(x_1) = Min \sum_{j=1}^{m} p_j c_2 x_{2j} \qquad \text{(eq.7)}$$

$$\text{s.t.} \quad \begin{array}{l} A_2 x_{21} \geq (b_{21} - E_1 x_1) \\ A_2 x_{22} \geq (b_{22} - E_1 x_1) \\ \vdots \\ A_2 x_{2m} \geq (b_{2m} - E_1 x_1) \end{array}$$

Therefore, the first-stage problem becomes

$$\text{Min} \quad c_1 x_1 + \overline{\alpha}_1(x_1) \qquad \text{(eq.8)}$$

$$\text{s.t.} \quad A_1 x_1 \geq b_1$$

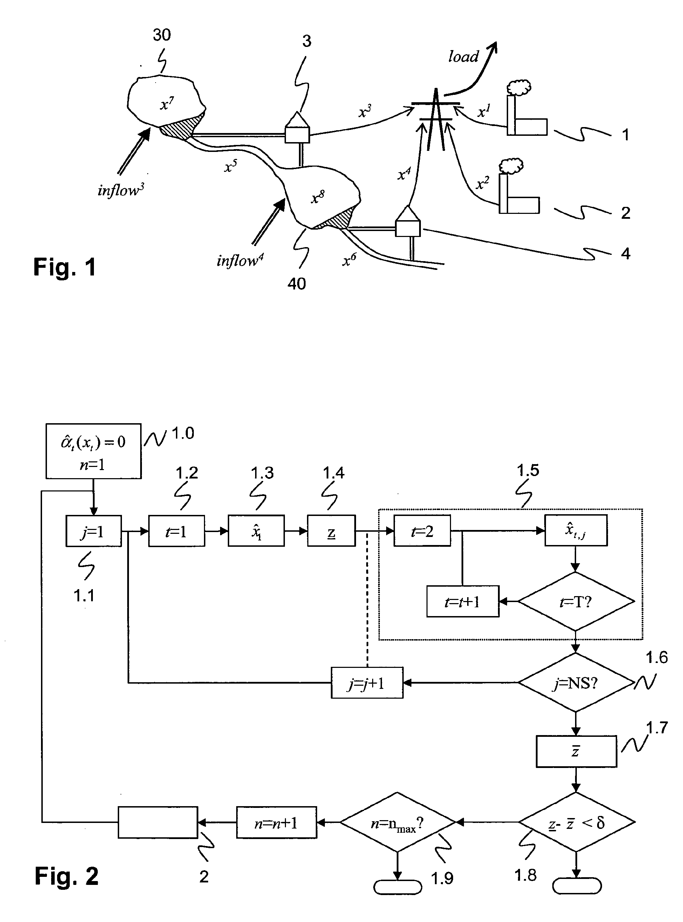

Fig.1 depicts a set-up of a system comprising two thermal power plants 1, 2 and two hydro power plants 3, 4 with their respective reservoirs 30, 40. In a practical but simplified two-stage numerical example of a stochastic scheduling problem for this system, the vector $x_t$ of control and state variables for stage t has the following eight components $x_t^1...x_t^8$ (which are likewise depicted in Fig.1 except for the index $t$):

$x_t^1$, $x_t^2$ = thermal output (the energy generated by thermal plant 1 and 2 at stage t)
$x_t^3$, $x_t^4$ = hydro output (the energy produced by hydro plant 3 and 4 at stage t)
$x_t^5$, $x_t^6$ = hydro spillage (the quantity of water not used by the hydro plant 3 and 4)
$x_t^7$, $x_t^8$ = hydro end storage (the reservoir level of hydro plant 3 and 4; state variables).

The corresponding stage-independent cost vector $c_t = c_1 = c_2$ has only two out of eight components different from zero. They relate to the first, cheaper and the second, more expensive thermal plant, and take the values $c_t^1 = 50$ and $c_t^2 = 65$ in arbitrary units. Accordingly, the objective function becomes

$$\text{Min} \quad 50x_1^1 + 65x_1^2 + 50x_2^1 + 65x_2^2 \qquad \text{(eq.1a)}.$$

The constraints (eqs.1b, 1c) are determined by the upper and lower bounds of the six control variables $x_t^1$ to $x_t^6$, in particular maximum power output and minimum spillage, and the two state variables, such as minimum storage requirement and maximum storage capacity. In addition, the load equations

$$x_t^1 + x_t^2 + x_t^3 + x_t^4 = \text{load}_t$$

as well as the water continuity equation at hydro plants 3 and 4

$$\eta^1 x_t^3 + x_t^5 + x_t^7 - x_{t-1}^7 = \text{inflow}_t^3$$

$$\eta^2 x_t^4 + x_t^6 + x_t^8 - x_{t-1}^8 = \text{inflow}_t^4,$$

where $\eta^1$ and $\eta^2$ provide a simplified conversion of the power output to the consumed quantity of water, have to be observed.

In arbitrary units, the vector of exogenous variable at stage t=1 is $b_1 = \text{inflow}_1 = \begin{bmatrix} 100 \\ 120 \end{bmatrix}$. In a stochastic case, the same vector of exogenous variables at stage t=2 is $b_2 = \text{inflow}_2$ and is assumed to take two possible values, i.e. $b_{2,1} = \begin{bmatrix} 180 \\ 160 \end{bmatrix}$ and $b_{2,2} = \begin{bmatrix} 210 \\ 200 \end{bmatrix}$, with equal probability and corresponding to two distinct states or two distinct discretizations of the random vector $b_2$.

An alternative first generalization of the concept to *multistage* Dual Dynamic Programming (DDP) comprises a planning horizon with T > 2 stages. The deterministic scheduling problem is represented as

$$\text{Min} \quad \sum_{t=1}^{T} c_t x_t$$

$$\text{s.t.} \quad A_t x_t \geq b_t - E_{t-1} x_{t-1} \qquad\qquad (\text{eq.9})$$

and likewise decomposed into single-stage sub problems as will be apparent from the next paragraph. As the proposed procedure will be preferably applied to long-term problems, a planning horizon of more than one year, divided into T stages with a duration or length of somewhere between one week and several months, can be expected.

A second or combined generalization of the concept to *multistage Stochastic* Dual Dynamic Programming (SDDP) is depicted as a flowchart in Fig.2. The planning horizon again comprises T > 2 stages, and the following steps are performed successively:

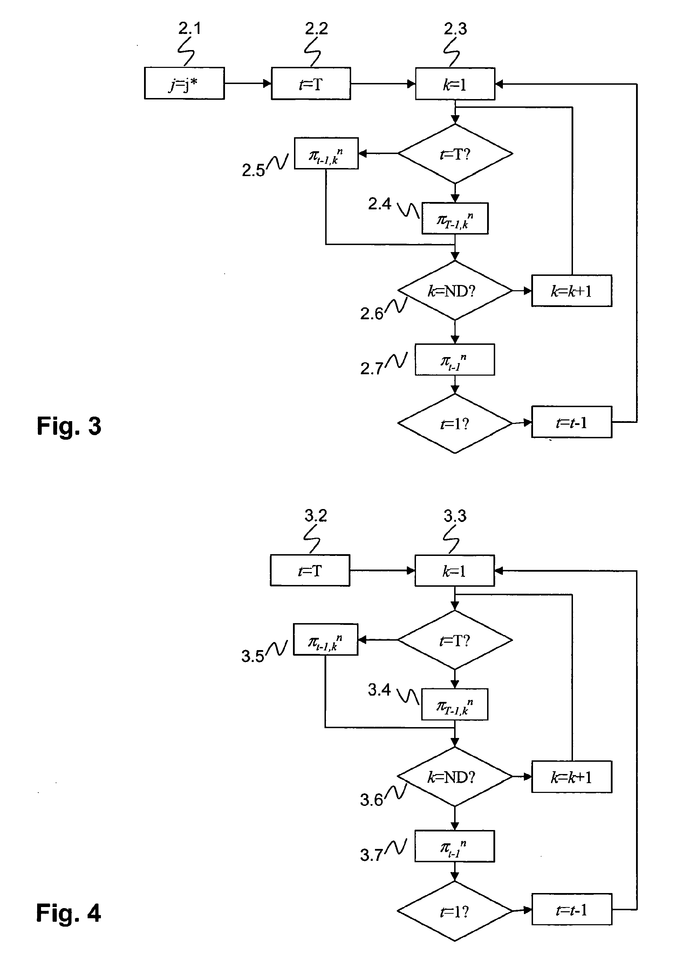

Step 1.0: The approximate future cost $\hat{\alpha}_t(x_t)$ for all stages $t$=1...T is initialized to zero for a first iteration $n$=1. For subsequent iterations n>1, the approximate future cost $\hat{\alpha}_t(x_t)$ will be increasingly refined in a backward recursion procedure as detailed below in connection with Fig.3.

Step 1.1: A first scenario $j$=1 is chosen.

Step 1.2: The first stage $t$=1 is initialized.

Step 1.3: The approximate deterministic first stage problem for the first scenario

$$\text{Min} \quad c_1 x_1 + \hat{\alpha}_1(x_1)$$

$$\text{s.t.} \quad A_1 x_1 \geq b_1 \qquad\qquad (\text{eq.10})$$

is solved to give an optimal first stage solution $\hat{x}_1$. In this notation, $\hat{\alpha}_1(x_1)$ is the approximate objective function covering the entire planning horizon from stage two up to the ultimate stage T. The parameter $b_1$ is assumed to be known exactly, i.e. the stochastic character only shows in stage two and later.

Step 1.4: The lower bound $\underline{z} = c_1 \hat{x}_1 + \hat{\alpha}_1(\hat{x}_1)$ is calculated as the sum of the first stage objective and the approximate future objective.

Step 1.5: The optimization problem is solved successively for stages $t$=2...T in a forward simulation. For the scenario $j$ chosen, at each stage $t$ the approximate single-stage sub-problem

$$\text{Min} \quad c_t x_{t,j} + \hat{\alpha}_t(x_{t,j})$$

$$\text{s.t.} \quad A_t x_{t,j} \geq b_{t,j} - E_{t-1} \hat{x}_{t-1,j} \qquad\qquad (\text{eq.11})$$

is solved to obtain the optimal solution $\hat{x}_{t,j}$ based on the optimal solution $\hat{x}_{t-1,j}$ of the previous stage $t$-1. Here, $\hat{\alpha}_t(x_t)$ is the approximate objective function representing all scenarios and covering the remaining planning horizon from stage $t$ up to the ultimate stage T. As in the two-stage deterministic case above (eqs.5), $\hat{\alpha}_t(x_t)$ is preferably represented as a set of inequalities involving Bender's cuts or optimality cuts comprising dual variables $\{\pi_i^j, i=1...n-1\}$. The latter are generated at each iteration $n$ of the backward recursion procedure as detailed below in connection with Fig.3.

Step 1.6: Unless $j = j_{max}$ = NS, the next scenario $j=j+1$ is chosen, i.e. steps 1.2 to 1.5 are repeated for each of the scenarios.

Step 1.7: An estimated upper bound $\bar{z}$ is calculated as $\bar{z} = \sum_{t=1}^{T} \sum_{j=1}^{NS} p_j c_t \hat{x}_{tj}$.

Step 1.8: A difference between the upper bound and the lower bound is calculated and compared to a threshold or tolerance $\delta$. If this threshold is not exceeded, the process terminates, otherwise, it proceeds to the next step. Termination of the process after step 1.8 includes the setting-up of a production schedule at least for the first stage, based on the optimal first stage solution $\hat{x}_1$ obtained in step 1.3 of the ultimate iteration n.

Step 1.9: If a maximum number of iterations $n_{max}$ is exceeded, the process terminates, otherwise it proceeds to a further iteration. To this end, in the backward recursion process 2, an improved estimate for the approximate future cost functions $\hat{\alpha}_t(x_t)$ is produced as detailed below in connection with Fig.3. The further iteration resumes at step 1.1.

As a consequence of the preferred variants of the backward recursion, $\hat{\alpha}_1(x_1)$ in fact is a unique function for all scenarios. Accordingly, the lower bound $\underline{z} = c_1\hat{x}_1 + \hat{\alpha}_1(\hat{x}_1)$ of step 1.4 takes the same value for all scenarios, and the loop over the scenarios need not include steps 1.2 to 1.4, as is indicated by the dashed arrow in Fig.2.

Fig.3 depicts a flowchart of a first variant of the backward recursion process 2. It is assumed, without loss of generality, that the constraint vectors $\{b_{t,j}, t=1...T, j=1...NS\}$ are independent random variables.

Step 2.1: One exemplary scenario $j=j^*$ is chosen, wherein the latter is advantageously representative of some average scenario. This choice determines the optimal solution $\hat{x}_{t,j}$ found in the preceding forward simulation that will be exploited in steps 2.4 and 2.5 below.

Step 2.2: The last stage $t=T$ is initialized.

Step 2.3: The first state $k=1$ is initialized.

Step 2.4: The following single stage sub-problem for the ultimate stage T is solved, with the optimal solution $\hat{x}_{T-1,j}$ obtained during the forward simulation at the penultimate stage T-1 (step 1.5 above) as trial decision:

$$\text{Min} \quad c_T x_{T,k} \quad\quad\quad (eq.12)$$

$$\text{s.t.} \quad A_T x_{T,k} \geq b_{T,k} - E_{T-1}\hat{x}_{T-1,j}$$

For a given state $k$, the solution of eq.12 leads to one optimality cut or Bender's cut $\pi_{T-1,k}{}^n$ associated to the penultimate stage trial decision $\hat{x}_{T-1,j}$.

Step 2.5: For stages $t$ other than the ultimate stage T, the following single-stage sub-problem is solved, with the optimal solution $\hat{x}_{t-1,j}$ obtained during the previous forward simulation at the earlier stage $t$-1 (step 1.5 above) as trial decision. Likewise, said single-stage sub-problem includes a number of dual variables $\{\pi_{t,k}{}^i, k=1...ND, i=1...n\}$ forming Bender's cuts derived in all previous as well as in the ongoing $n^{th}$ backward recursion iteration at the later stage $t$+1.

$$\text{Min} \quad c_t x_{t,k} + \alpha \quad\quad\quad (eq.13a)$$

$$\text{s.t.} \quad A_t x_{t,k} \geq b_{t,k} - E_{t-1}\hat{x}_{t-1,j} \quad\quad\quad (eq.13b)$$

$$\alpha \geq \frac{1}{ND} \sum_{\kappa=1}^{ND} \pi_{t,\kappa}{}^i (b_{t+1,\kappa} - E_t x_{t,k}), i=1...n \quad\quad\quad (eq.13c)$$

For a given state $k$, the solution of eq.13 leads to one optimality cut or Bender's cut $\pi_{t-l,k}{}^n$ associated to the earlier stage trial decision $\hat{x}_{t-1,j}$.

Step 2.6: The previous steps 2.4 and 2.5 are repeated for all states k, i.e. a number ND of Bender's cuts $\{\pi_{t-1,k}{}^n, k=1...ND\}$ are derived at the present iteration $n$ on behalf of the earlier stage $t$-1.

Step 2.7: The Bender's cuts are averaged to yield the $n^{th}$ Bender's cut for stage t-1, indicative of an $n^{th}$ contribution to the approximate future objective function $\hat{\alpha}_{t-1}$ $(x_{t-1})$in the form of an additional inequality to be used in step 1.5 of the next iteration.

Fig.4 depicts a flowchart of a second variant of the backward recursion process 2. In these variants, it is assumed that the number NS of scenarios that have been used in the forward simulation (index j) equals the number ND of states to be considered in the backward recursion (index k). In other words, a one-to-one correspondence between states and scenarios is assumed. Hence the index k allows to identify optimal solutions $\hat{x}_{t,k}$ obtained during the forward simulation of the same iteration, and no exemplary scenario $j=j^*$ has to be designated.

Step 3.2: The last stage $t$=T is initialized.

Step 3.3: The first state $k$=1 is initialized.

Step 3.4: The following single stage sub-problem for the ultimate stage T is solved, with the optimal solution $\hat{x}_{T-1,k}$ obtained during the forward simulation at the penultimate stage T-1 (step 1.5 above) as trial decision:

$$\text{Min} \quad c_T x_{T,k} \qquad\qquad (eq.14)$$

$$\text{s.t.} \quad A_T x_{T,k} \geq b_{T,k} - E_{T-1}\hat{x}_{T-1,k}$$

For a given state k, the solution of eq.14 leads to one optimality cut or Bender's cut $\pi_{T-1,k}{}^n$ associated to the penultimate stage trial decision $\hat{x}_{T-1,k}$.

Step 3.5: For stages $t$ other than the ultimate stage T, the following single-stage sub-problem is solved, with the optimal solution $\hat{x}_{t-1,k}$ obtained during the previous forward simulation at the earlier stage $t$-1 (step 1.5 above) as trial decision. Likewise, said single-stage sub-problem includes a number of dual variables $\{\pi_{t,k}{}^i, i=1...n\}$ forming Bender's cuts derived in all previous as well as in the ongoing $n^{th}$ backward recursion iteration at the later stage $t$+1 and for the given state $k$. Contrary to step 2.5 above, these dual variables form individual Bender's cuts related to the given state k under consideration, and are thus not averaged.

$$\text{Min} \quad c_t x_{t,k} + \alpha \qquad\qquad (eq.15a)$$

$$\text{s.t.} \quad A_t x_{t,k} \geq b_{t,k} - E_{t-1}\hat{x}_{t-1,k} \qquad\qquad (eq.15b)$$

$$\alpha \geq \pi_{t,k}{}^i (b_{t+1,k} - E_t x_{t,k}) \text{ for } i=1...n \qquad\qquad (eq.15c)$$

For a given state $k$, the solution of eq.15 leads to one optimality cut or Bender's cut $\pi_{t-1,k}{}^n$ associated to the earlier stage trial decision $\hat{x}_{t-1,j}$.

Step 3.6: The previous steps 3.4 and 3.5 are repeated for all states k, i.e. a number ND of Bender's cuts $\{\pi_{t-l,k}{}^i, k=1...ND\}$ are derived at the present iteration $n$.

Step 3.7: The ND Bender's cuts are averaged to yield the $n^{th}$ Bender's cut for stage t-1, indicative of an $n^{th}$ contribution to the approximate future objective function $\hat{\alpha}_{t-1}$ $(x_{t-1})$. However, and again contrary to the first variant, the $n^{th}$ Bender's cut $\pi_{t-1}{}^n$ is only to be used in the next forward simulation $n$+1, but not on behalf of the earlier stage $t$-1 in the presently ongoing $n^{th}$ backward recursion. The latter, as detailed in step 3.5 above, includes exclusively dual variables $\{\pi_{t-l,k}{}^i, i=1...n\}$ forming individual Bender's cuts related to the given state $k$ under consideration.

On the other hand, in an alternative sub-variant to this second variant, the average $n^{th}$ Bender's cut $\pi_{t-1}{}^n$ for stage t-1, obtained in step 3.7, may be used in the presently ongoing $n^{th}$ backward recursion. In other words, eq.15c from the second variant is replaced by eq. 13c known from the first variant.

To determine the scenarios, historical data of the different uncertain inputs, such as reservoir inflow and power demand, is obtained from a conversion system and evaluated. The data are then analyzed statistically to work out their trends, mean-reversion rates and mutual correlations. The statistical parameters derived are fed into a scenario generator which generates various availability scenarios using Monte Carlo simulation. From these scenarios, states are derived such that at a particular stage $t$, a limited number of ND discrete values of the exogenous variables of the vector $b_t$ approximate the distributed values according to the multitude of scenarios.

**Claims**

1. A method of converting two independent resources into a product, wherein, during future stages $t$, a deterministic resource is available in a predictable manner and a stochastic resource is available in a non-predictable manner **characterised by**, for at least one future stage $t$, a number ND of distinct states $\{b_{t,k}, k=1...ND\}$ or vectors of exogenous variables, comprising

   a) setting up an objective function (eq.1a) covering at least two successive stages $t$, $t+1$, and based on a control vector $x_t$ with at least two control variables $x_t^1$, $x_t^3$ indicative of a consumption of the two resources,
   b) determining constraints (eqs.1b, 1c) on the at least two control variables $x_t^1$, $x_t^3$ based on an availability of the two resources and based on a demand of the product,
   c) obtaining, for each of a number NS of availability scenarios, successively and in increasing order for each stage $t$ of a number of T stages into the future, an optimal solution $\hat{x}_{t,j}$ for the control vector by solving a single-stage sub-problem (eq.11) with a stage-dependent approximate future objective function $\hat{\alpha}_t(x_t)$ based on the objective function (eq.1a) and the constraints (eqs. 1b, 1c),
   d) refining, successively and in decreasing order for each stage t, the stage-dependent approximate future objective function $\hat{\alpha}_t(x_t)$ based on at least one of the optimal solutions $\hat{x}_{t,j}$ for the control vector as a trial decision in a single-stage sub-problem (eq.13, eq.15),
   e) iteratively repeating steps c) and d), and
   f) setting up a production schedule for converting the resources based on at least the optimal solution $\hat{x}_1$ of the control vector for the first stage,
   **characterized in that** step d) comprises
   d') refining $\hat{\alpha}_t(x_t)$ by means of at most ND Bender's cuts comprising dual variables $\pi_{t,k}^n$ obtained by solving at most ND single-stage sub problems.

2. The method according to claim 1, **characterised in that** step d) comprises

   d') refining $\hat{\alpha}_t(x_t)$ by means of exactly ND Bender's cuts comprising dual variables $\pi_{t,k}^n$ obtained by solving one single-stage sub problem for each state k.

3. The method according to claim 1, **characterised in that** step d) comprises

   d') calculating a stage-dependent approximate future objective function $\hat{\alpha}_t(x_t)$ by averaging the at most ND Bender's cuts.

4. The method according to claim 3, wherein a specific availability scenario j* is selected and **characterised in that** step d) comprises

   d") refining, successively and in decreasing order for each stage t, the stage-dependent approximate future objective function $\hat{\alpha}_t(x_t)$ based on the optimal solution $\hat{x}_{t,j}$* for the specific availability scenario j* as a trial decision.

5. The method according to claim 3, wherein each availability scenario corresponds to exactly one state and **characterised in that** step d) comprises

   d") refining, successively and in decreasing order for each stage $t$, the stage-dependent approximate future objective function $\hat{\alpha}_t(x_t)$ based on, for each state $k$, the optimal solution $\hat{x}_{t,k}$ for the availability scenario corresponding to the state $k$ as a trial decision in the single-stage sub-problem (eq.15).

6. The method according to one of claims 1 to 5, wherein the stochastic resource is storable in a reservoir and **characterised in that** step b) comprises

   b') determining inter-stage constraints (eqs.1c) relating control variables $x_t^1$, $x_t+1^1$ from two successive stages t, t+1.

**7.** The method according to claim 6, wherein the stochastic resource is hydropower, the deterministic resource is a fossil fuel, and the product is electric energy.

**8.** The method according to one of claims 1 to 6, **characterised in that** the distinct states $\{b_{t,k}\}$ are derived from historical data of a system converting the two independent resources into the product.

**9.** An operation scheduler setting up a production schedule for converting two independent resources into a product based on at least an optimal solution $\hat{x}_1$, of a control vector for a first stage, wherein, during future stages $t$, a deterministic resource is available in a predictable manner and a stochastic resource is available in a non-predictable manner **characterised by**, for at least one future stage $t$, a number ND of distinct states $\{b_{t,k}, k=1...ND\}$ or vectors of exogenous variables, comprising

a) an objective function (eq.1a) covering at least two successive stages $t$, $t+1$, and based on a control vector $x_t$ with at least two control variables $x_t^1$, $x_t^3$ indicative of a consumption of the two resources,
b) constraints (eqs.1b, 1c) on the at least two control variables $x_t^1$, $x_t^3$ based on an availability of the two resources and based on a demand of the product,
c) means for obtaining, for each of a number NS of availability scenarios, successively and in increasing order for each stage $t$ of a number of T stages into the future, an optimal solution $\hat{x}_{t,j}$ for the control vector by solving a single-stage sub-problem (eq.11) with a stage-dependent approximate future objective function $\hat{\alpha}_t(x_t)$ based on the objective function (eq.1a) and the constraints (eqs.1b,1c),
d) means for refining, successively and in decreasing order for each stage $t$, the stage-dependent approximate future objective function $\hat{\alpha}_t(x_t)$ based on at least one of the optimal solutions $\hat{x}_{t,j}$ for the control vector as a trial decision in at most ND single-stage sub-problems (eq.13, eq.15) yielding at most ND Bender's cuts comprising at most ND dual variables $\pi_{t,k}^n$.

Fig. 1

Fig. 2

**Fig. 3**

2.1
2.2
2.3

$j=j^*$ → $t=T$ → $k=1$

$t=T?$

2.5 $\quad \pi_{t-1,k}^{n}$

2.4 $\quad \pi_{T-1,k}^{n}$

$k=ND?$ → $k=k+1$

2.6

2.7 $\quad \pi_{t-1}^{n}$

$t=1?$ → $t=t-1$

**Fig. 4**

3.2
3.3

$t=T$ → $k=1$

$t=T?$

3.5 $\quad \pi_{t-1,k}^{n}$

3.4 $\quad \pi_{T-1,k}^{n}$

$k=ND?$ → $k=k+1$

3.6

3.7 $\quad \pi_{t-1}^{n}$

$t=1?$ → $t=t-1$

**European Patent**
**Office**

**DECLARATION**

which under Rule 45 of the European Patent Convention
shall be considered, for the purposes of subsequent
proceedings, as the European search report

Application Number

EP 06 40 5208

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason:<br><br>The claims 1-9 of the application are considered to relate to subject matter excluded from patentability under Art 52(2) and (3) EPC and formulated to merely specify commonplace features related to a technological implementation of such matter to such an extend that a meaningful search is not possible. The examiner could not determine any technical solution defined in response to a problem within the content of the application as originally filed. Any problems which are addressed do not appear to require a technical, but rather an administrative, i.e. business, solution. Whilst the implementation of such solutions may include the use of generic technical features, these merely serve their well known functions as would be recognized by the skilled person in the technical field under consideration.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br>----- | INV.<br>G06Q10/00<br>G06Q30/00<br>G06Q50/00 |

| Place of search | Date | Examiner |
|---|---|---|
| The Hague | 22 May 2007 | Marcu, Antoniu |

EPO FORM 1504 (P04C37)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M.V.F. PEREIRA.** Optimal Stochastic Operations Scheduling of Large Hydroelectric Systems. *International Journal of Electric Power and Energy Systems,* July 1989, vol. 11 (3), 161-169